# NEUE EUROPÄISCHE PATENTSCHRIFT

(11) **EP 0 443 455 B2**
(45) Veröffentlichungstag und Bekanntmachung des Hinweises auf die Entscheidung über den Einspruch: **06.08.1997**
(45) Hinweis auf die Patenterteilung: 01.06.1994
(21) Anmeldenummer: 91102170.7
(22) Anmeldetag: 15.02.1991
(51) Int. Cl.: B60B 39/00

(54) **Schwenkvorrichtung für ein Schleuderkettenaggregat**
Pivoting device for anti-skid chain assembly
Dispositif de pivotement pour un aggrégat de chaîne anti-dérapage

(30) Priorität: 20.02.1990 DE 4005700
(43) Veröffentlichungstag der Anmeldung: 28.08.1991
(73) Patentinhaber: Schulz, Gerd, D-34289 Zierenberg (DE)
(72) Erfinder: Schulz, Gerd, D-34289 Zierenberg (DE)
(74) Vertreter: Eisenführ, Speiser & Partner

(56) Entgegenhaltungen:
- EP-A- 0 162 823
- EP-A- 0 209 869
- EP-A- 0 255 468
- EP-A- 0 278 896
- DE-A- 3 611 836
- DE-A- 3 910 619
- DE-C- 2 237 244

## Beschreibung

Die Erfindung betrifft eine Schwenkvorrichtung für ein Schleuderkettenaggregat eines Kraftfahrzeuges, bei welcher in einem Hohlraum eines Gehäuses eine Zahnstange längsverschiebbar geführt und ein mit der Zahnstange ein Getriebe bildendes Zahnrad angeordnet ist, das drehfest auf einer Antriebswelle sitzt, deren eines Ende aus dem Gehäuse ragt und einen Schwenkarm treibt.

Eine solche Schwenkvorrichtung ist beispielsweise aus der EP-A-0 209 869 bekannt. Bei dieser bekannten Schwenkvorrichtung sitzt am Gehäuse ein Antrieb, der eine axial bewegbare Schubstange aufweist, die in einem dem Antrieb zugewandten Sacklock der Zahnstange endet. Dadurch wird die vom Antrieb erzeugte Axialbewegung der Schubstange auf die Zahnstange übertragen, um den Schwenkarm zu treiben. Als Medium zur Beaufschlagung der Schubstange innerhalb des Antriebes wird Luft verwendet, die von einem von der Schwenkvorrichtung entfernt am Kraftfahrzeug angeordneten Kompressor erzeugt wird. Damit ein solcher Pneumatikantrieb auch genügend Kraft zur Verschiebung der Schubstange und der mit dieser mechanisch gekoppelten Zahnstange und somit zum Verschwenken des Schwenkarms entfalten kann, wird ein relativ großes Volumen an Luft zur Beaufschlagung der Schubstange benötigt. Dementsprechend muß der mit der Schubstange gekoppelte Kolben und somit der im Antrieb sitzende und den Kolben aufnehmende Zylinder einen verhältnismäßig großen Durchmesser haben. Dadurch erhält der Antrieb ein recht hohes Bauvolumen, was für die gesamte Vorrichtung einen erhöhten Platzbedarf zur Folge hat. Da der Platz unterhalb des Kraftfahrzeuges im Bereich der Räder naturgemäß recht eng ist, kann es bei dem Einbau dieser bekannten Schwenkvorrichtung aufgrund des erhöhten Bauvolumens zu Problemen kommen. Diese Probleme entstehen insbesondere bei Personenkraftwagen, wo ein Einbau der bekannten Schwenkvorrichtung aufgrund des recht hohen Bauvolumens bisher praktisch ausgeschlossen war.

Es ist daher Aufgabe der Erfindung, den Platzbedarf der eingangs erwähnten Schwenkvorrichtung zu verkleinern, ohne die Andruckkraft des Schwenkarms herabzusetzen und auf die Vorteile eines pneumatischen Antriebes zu verzichten.

Diese Aufgabe wird bei der Schwenkvorrichtung der eingangs genannten Art dadurch gelöst, daß
- die Innenwandung des Hohlraums zylindrisch ist,
- die Zahnstange in einen von einer Stirnwand abgeschlossenen Zylinderabschnitt des Hohlraumes ragt und einen Kolben aufweist, der von einem außerhalb der Zahnreihe liegenden zylindrischen Abschnitt der Zahnstange gebildet ist und an der zylindrischen Innenwand des Zylinderabschnittes abgedichtet geführt ist,
- in den so abgedichteten Raum zwischen Kolben und Stirnwand zur Bewegung der Zahnstange Hydrauliköl von einem Hydraulikzylinder pumpbar ist und
- der Hydraulikkolben des Hydraulikzylinders mit einem Pneumatikkolben eines Pneumatikzylinders gekoppelt ist, welcher einen größeren Durchmesser als der Hydraulikzylinder besitzt.

Gegenüber dem Stand der Technik sitzt der Kolben nicht mehr in einem am Gehäuse der Schwenkvorrichtung angeordneten Antrieb, sondern ist erfindungsgemäß nun in den die Zahnstange aufnehmenden Hohlraum des Gehäuses 'verlagert' und wird von einem außerhalb der Zahnreihe liegenden zylindrischen Abschnitt der Zahnstange selbst gebildet. Die Kraftübertragung auf die Zahnstange erfolgt demnach nicht mehr über eine von einem separaten Antrieb angetriebenen Schubstange, sondern mit Hilfe von Hydrauliköl, das auf die Stirnseite des zylindrischen Abschnittes der Zahnstange direkt beaufschlagt wird. Erfindungsgemäß bilden somit der Zylinderabschnitt des die Zahnstange aufnehmenden Hohlraums des Gehäuses und der außerhalb der Zahnreihe liegende zylindrische Abschnitt der Zahnstange gemeinsam eine Hydraulik-Zylinder/Kolben-Anordnung innerhalb des Gehäuses. Da sich mit Hydrauliköl bei verringertem Volumen wesentlich höhere Drücke als mit Pneumatikluft erzeugen lassen, kann die Bauform der gesamten Schwenkvorrichtung reduziert werden.

Da jedoch in Kraftfahrzeugen im allgemeinen keine Hydraulikpumpe verfügbar ist und damit der Schwenkarm in ausgefahrener Stellung federnd gegen das Rad gedrückt werden kann, wird der Druck im Hydrauliköl von einem vorzugsweise entfernt angeordneten Pneumatikzylinder erzeugt. Hierzu ist erfindungsgemäß ein Hydraulikzylinder vorgesehen, von dem das Hydrauliköl in den Zylinderabschnitt des Gehäuses der Schwenkvorrichtung geleitet wird. Der Hydraulikzylinder enthält einen Hydraulikkolben, der von einem Pneumatikkolben eines Pneumatikzylinders angetrieben wird, wozu beide Kolben erfindungsgemäß miteinander gekoppelt sind. Damit der Pneumatikkolben den benötigten Druck auf den Hydraulikkolben überträgt, besitzt der Pneumatikzylinder einen größeren Durchmesser als der Hydraulikzylinder. Außerdem wird auf diese Weise das für den federnden Andruck des Schwenkarms benötigte Luftpolster erzeugt, so daß bei Rückschlagbewegungen des Schwenkarms der dadurch entstehende Druck über das vergleichsweise inkompressible Hydrauliköl in entgegengesetzter Richtung auf das Luftpolster des Pneumatikzylinders übertragen wird.

Somit ist es mit Hilfe der Erfindung möglich, das Bauvolumen des Gehäuses der Schwenkvorrichtung in einem bisher nicht bekannten Maße so zu verkleinern und kompakt auszuführen, daß nunmehr auch Schwenkvorrichtungen erstmals an Kraftfahrzeugen in besonders beengten Platzverhältnissen angebracht werden können, welche den Einsatz bisheriger Schwenkvorrichtungen nicht erlaubten.

Um das Bauvolumen des Gehäuses und insbesondere des Zylinderabschnittes auf ein Minimum zu reduzieren, sollte vorzugsweise der Durchmesser der Zahnstange über ihre gesamte Länge im wesentlichen konstant sein. Dies hat zur Folge, daß auch der Durchmesser des als Kolben dienenden zylindrischen Abschnittes der Zahnstange nicht größer als der übrige Teil der Zahnstange ist.

Ein besonders wirkungsvoller Antrieb der Zahnstange durch die Pneumatik-Hydraulik-Anordnung ergibt sich in vorteilhafter Weise dadurch, daß das Verhältnis der Wirkflächen von Hydraulik- und Pneumatikkolben etwa 1:10 beträgt.

In besonders beengten Platzverhältnissen ist es vorteilhaft, den Hydraulikzylinder entfernt von dem Gehäuse der Schwenkvorrichtung am Kraftfahrzeug anzuordnen, so daß der Hydraulikzylinder über eine Schlauchleitung mit dem Zylinderabschnitt des Gehäuses verbunden ist.

Alternativ hierzu kann jedoch der Hydraulikzylinder auch am Zylinderabschnitt des Gehäuses direkt angebracht sein. In der Regel ist es dann aus Gründen der Gehäusesymmetrie von Vorteil, wenn der Hydraulikzylinder an der Stirnwand des Zylinderabschnittes sitzt. Damit bei der direkten Anbringung des Hydraulikzylinders am Gehäuse auf eine Schlauchverbindung verzichtet werden kann, sollte vorzugsweise die Auslaßöffnung des Hydraulikzylinders mit einer Einlaßöffnung im Zylinderabschnitt des Gehäuses fluchten.

Zur kompakten Anordnung von Hydraulik- und Pneumatikzylinder weisen diese in einer bevorzugten Ausführungsform der Erfindung ein gemeinsames Gehäuse auf.

Eine weitere Ausführungsform der Erfindung zeichnet sich dadurch aus, daß die Zahnstange einen zu ihrem dem Zylinderabschnitt des Gehäuses entgegengesetzten Ende offenen Hohlraum enthält, in dem eine in Verschieberichtung der Zahnstange wirkende und sich am Gehäuse abstützende Feder sitzt. Während der erfindungsgemäße Pneumatik-Hydraulik-Antrieb die erforderliche Kraft zur Verschwenkung des Schwenkarms von der Ruhe- in die Arbeitsstellung liefert, erzeugt die Feder eine entgegengesetzt wirkende Rückstellkraft, welche zum Verschwenken des Schwenkarms von der Arbeits- in die Ruhestellung benötigt wird. Auf diese Weise kann auf die Anordnung von Verriegelungseinrichtungen und/oder entgegengesetzt wirkenden zusätzlichen Pneumatikzylindern verzichtet werden, wie sie im Stand der Technik verschiedentlich Verwendung finden. Damit bei dieser Ausführungsform die Anordnung der Feder das Bauvolumen der Schwenkvorrichtung nicht beeinflußt, sitzt die Feder in einem innerhalb der Zahnstange vorgesehenen Hohlraum. Vorzugsweise kann es sich dabei um eine Gasdruckfeder handeln.

Nachfolgend wird ein Ausführungsbeispiel der Erfindung anhand der beiliegenden Zeichnungen nähererläutert. Es zeigen:
- Fig. 1: einen Längsschnitt (a) und einen Querschnitt (b) durch sowie eine Draufsicht (c) auf ein Gehäuse einer Schwenkvorrichtung;
- Fig. 2: die Schwenkvorrichtung mit einem getrennt von dieser angeordneten Antrieb; und
- Fig. 3: die Schwenkvorrichtung mit direkt an deren Gehäuse angebrachtem Antrieb.

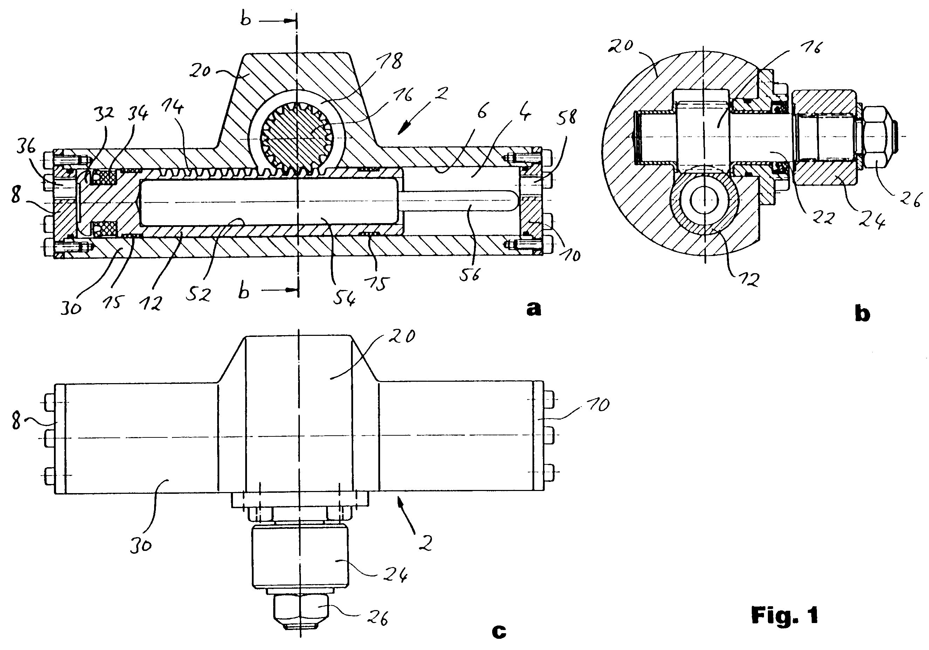

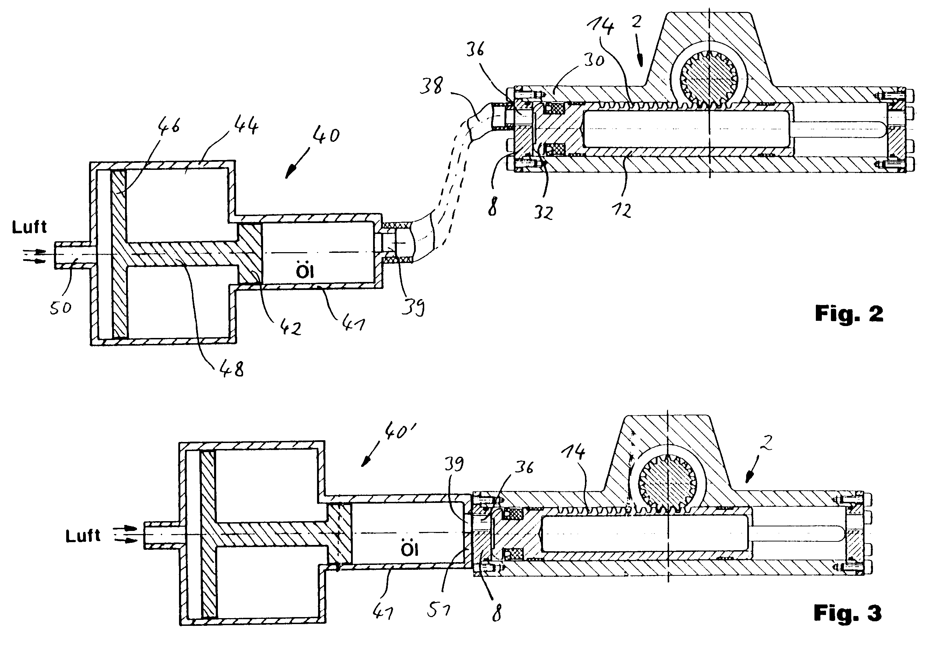

In Fig. 1 ist in verschiedenen Ansichten eine Schwenkvorrichtung gezeigt, wobei der zugehörige Antrieb weggelassen ist, welcher jedoch in den Fig. 2 und 3 in Verbindung mit der Schwenkvorrichtung dargestellt ist.

Die Schwenkvorrichtung besitzt ein Gehäuse 2, das einen Hohlraum 4 mit einer zylindrischen Innenwandung 6 enthält. Der Hohlraum 4 wird an beiden Stirnseiten des Gehäuses 2 von Stirnplatten 8, 10 verschlossen.

Innerhalb des Hohlraums 4 des Gehäuses 2 ist eine zylindrische Zahnstange 12 längsverschiebbar geführt. Um eine gute Gleitführung herzustellen, sind benachbart zu beiden Enden Gleitringe 15 an der Zahnstange 12 angebracht, die an der zylindrischen Innenwandung 6 des Hohlraums 4 flächig aufliegen. Die Gleitringe 15 erfüllen nicht nur eine Gleit-, sondern auch eine Dichtfunktion. Der Außendurchmesser der Zahnstange 12 ist geringfügig kleiner als der Innendurchmesser des Hohlraums 4.

Zwischen den beiden Gleitringen 15 ist die Zahnstange 12 mit einer Zahnreihe 14 versehen, die sich in Eingriff mit einem Zahnrad 16 befindet. Somit bildet die Zahnstange 12 mit dem Zahnrad 16 ein Getriebe. Das Zahnrad 16 sitzt drehfest auf einer Antriebswelle 22, die innerhalb einer Ausnehmung 18 in einem erhöhten Gehäuseabschnitt 20 des Gehäuses 2 drehbar gelagert ist. Wie die Fig. 1b und c erkennen lassen, ragt die Antriebswelle 22 mit ihrem einen Ende aus dem Gehäuseabschnitt 20 heraus und trägt den Sockel 22 eines in den Figuren nicht dargestellten Schwenkarmes. Der Sockel 24 des Schwenkarmes ist mittels einer Mutter 26 auf der Antriebswelle 22 befestigt. Bei Drehung der Antriebswelle 22 wird der Schwenkarm von einer Ruhein eine Arbeitsstellung, in der das am freien Ende des Schwenkarmes sitzende Kettenrad zur Innenseite des Rades gedrückt wird, und zurück verschwenkt.

Das Gehäuse 2 besitzt einen Zylinderabschnitt 30, der von der Stirnplatte verschlossen ist und in den die Zahnstange 12 mit einem Kolbenabschnitt 32 ragt. Der Kolbenabschnitt 32 ist mit einem Kolbenring 34 versehen, der an der zylindrischen Innenwand 6 des Zylinderabschnittes 30 abgedichtet geführt ist. Der Kolbenabschnitt 32 dient als Antriebskolben und wird von einem Hydrauliköl beaufschlagt, das durch eine Einlaßöffnung 36 in der Stirnplatte 8 in den zwischen dem Kolbenabschnitt 32 der Zahnstange 12 und der Stirnplatte 8 abgeschlossenen Raum gepumpt wird.

Wie Fig. 2 zeigt, ist an der Einlaßöffnung 36 ein Schlauch 38 angeschlossen, welcher mit seinem anderen Ende an einer Auslaßöffnung 39 eines Antriebes 40 angeschlossen ist. Mit Hilfe des Schlauches 38 kann der Antrieb 40 vom Gehäuse 2 der Schwenkvorrichtung entfernt am Kraftfahrzeug angeordnet werden.

Mit Hilfe des Antriebs 40 wird das Hydrauliköl durch den Schlauch 38 in den Zylinderabschnitt 30 des Gehäuses 2 gepumpt, um zur Bewegung der Zahnstange 12 und somit zum Verschwenken des Schwenkarmes Druck auf den Kolbenabschnitt 32 der Zahnstange 12 auszuüben. Hierfür enthält der Antrieb 40 einen Hydraulikzylinder 41, in dem ein Hydraulikkolben 42 verschiebbar angeordnet ist. Ferner weist der Antrieb 40 einen Pneumatikzylinder 44 auf, dessen Pneumatikkolben 46 über eine starre Verbindung 48 mit dem Hydraulikkolben 42 gekoppelt ist. Der Pneumatikzylinder 44 besitzt an seiner dem Pneumatikkolben 46 gegenüberliegenden Seite eine Lufteinlaßöffnung 50, die über einen weiteren Schlauch an einem im Kraftfahrzeug befindlichen Luftkompressor angeschlossen ist (in Fig. 2 und 3 nicht dargestellt). Durch die über die Lufteinlaßöffnung 50 in den Pneumatikzylinder 44 eintretende Luft wird der Pneumatikkolben 46 in Richtung auf den Hydraulikzylinder 41 verschoben. Durch die starre Verbindung 48 wandert der Hydraulikkolben 42 in Richtung aufdie Auslaßöffnung 39, so daß das Hydrauliköl aus dem Hydraulikzylinder 41 herausgedrückt und über den Schlauch 38 in den zwischen der Stirnplatte 8 und dem Kolbenabschnitt 32 der Zahnstange 12 abgedichteten Raum des Zylinderabschnittes 30 des Gehäuse 2 gepumpt wird. Dies hat zur Folge, daß die Zahnstange 12 zum Verschwenken des Schwenkarmes entsprechend verschoben wird.

Alternativ zu der in Fig. 2 dargestellten Ausführungsform ist es auch denkbar, den Antrieb 40' direkt am Gehäuse 2 der Schwenkvorrichtung zu befestigen. Dabei sollte die Befestigung so erfolgen, daß die Auslaßöffnung 39 des Antriebs 40' mit der Einlaßöffnung 36 des Zylinderabschnittes 30 fluchtet. Bei einer solchen Anordnung entfällt die Schlauchverbindung zwischen dem Gehäuse 2 und dem Antrieb 40'. Bei der in Fig. 3 dargestellten Ausführungsform ist der Antrieb 40' mit der Stirnseite 51 des Hydraulikzylinders 41 an die Stirnplatte 8 des Gehäuses 2 angesetzt. Dies ergibt eine im wesentlichen axialsymmetrische Anordnung.

Wie Fig. 1 ferner erkennen läßt, enthält die Zahnstange 12 einen Hohlraum 52, der zur Stirnplatte 10 hin offen ist und sich in Axial- bzw. Verschieberichtung der Zahnstange 12 erstreckt. Im Hohlraum 52 sitzt eine Gasdruckfeder 54, die sich mit ihrer Kolbenstange 56 an der Stirnplatte 10 abstützt. Die Gasdruckfeder 54 ist so vorgespannt, daß sie dem vom Hydrauliköl erzeugten Druck auf die Zahnstange 12 entgegenwirkt. Zur Entlüftung ist eine Entlüftungsöffnung 58 in der Stirnplatte 10 vorgesehen. Somit dient die Gasdruckfeder 54 als Rückstellorgan zum Verschwenken des Schwenkarms von seiner Arbeits- in die Ruhestellung, wenn der Antrieb 40 bzw. 40' inaktiviert ist.

## Patentansprüche

1. Schwenkvorrichtung für ein Schleuderkettenaggregat eines Kraftfahrzeuges, bei welcher
- in einem Hohlraum (4) eines Gehäuses (2) eine Zahnstange (12) längsverschiebbar geführt und ein mit der Zahnstange (12) ein Getriebe bildendes Zahnrad (16) angeordnet ist, das drehfest auf einer Antriebswelle (22) sitzt, deren eines Ende aus dem Gehäuse (2, 20) ragt und einen Schwenkarm treibt,
dadurch gekennzeichnet, daß
- die Innenwandung (6) des Hohlraums (4) zylindrisch ist,
- die Zahnstange (12) in einen von einer Stirnwand (8) abgeschlossenen Zylinderabschnitt (30) des Hohlraumes (4) ragt und einen Kolben (32) aufweist, der von einem außerhalb der Zahnreihe (14) liegenden zylindrischen Abschnitt (32) der Zahnstange (12) gebildet ist und an der zylindrischen Innenwand (6) des Zylinderabschnittes (30) abgedichtet geführt ist,
- in den so abgedichteten Raum zwischen Kolben (32) und Stirnwand (8) zur Bewegung der Zahnstange (12) Hydrauliköl von einem Hydraulikzylinder (41) pumpbar ist und
- der Hydraulikkolben (42) des Hydraulikzylinders (41) mit einem Pneumatikkolben (46) eines Pneumatikzylinders (44) gekoppelt ist, welcher einen größeren Durchmesser als der Hydraulikzylinder (41) besitzt.

2. Vorrichtung nach Anspruch 1,
dadurch gekennzeichnet, daß der Durchmesser der Zahnstange (12) über ihre gesamte Lange im wesentlichen konstant ist.

3. Vorrichtung nach Anspruch 1 oder 2,
dadurch gekennzeichnet, daß das Verhältnis der Wirkflächen von Hydraulik- und Pneumatikkolben etwa 1:10 beträgt.

4. Vorrichtung nach einem der Ansprüche 1 bis 3,
dadurch gekennzeichnet, daß der Hydraulikzylinder (41) über eine Schlauchleitung (38) mit dem Zylinderabschnitt (30) des Gehäuses (2) verbunden ist.

5. Vorrichtung nach einem der Ansprüche 1 bis 3,
dadurch gekennzeichnet, daß der Hydraulikzylinder (41) am Zylinderabschnitt (30) des Gehäuses (2) angebracht ist.

6. Vorrichtung nach Anspruch 5,
dadurch gekennzeichnet, daß der Hydraulikzylinder (41) an der Stirnwand (8) des Zylinderabschnittes (30) sitzt.

7. Vorrichtung nach Anspruch 5 oder 6,
dadurch gekennzeichnet, daß die Auslaßöffnung (39) des Hydraulikzylinders (41) mit einer Einlaßöffnung (36) im Zylinderabschnitt (30) des Gehäuses (2) fluchtet.

8. Vorrichtung nach einem der Ansprüche 1 bis 7,
dadurch gekennzeichnet, daß der Hydraulikzylinder (41) und der Pneumatikzylinder (44) ein gemeinsames Gehäuse aufweisen.

9. Vorrichtung nach einem der Ansprüche 1 bis 8, dadurch gekennzeichnet, daß die Zahnstange (12) einen zu ihrem dem Zylinderabschnitt (30) des Gehäuses (2) entgegengesetzten Ende offenen Hohlraum (52) enthält, in dem eine in Verschieberichtung der Zahnstange (12) wirkende und sich am Gehäuse (2, 10) abstütztende Feder (54) sitzt.

10. Vorrichtung nach Anspruch 9,
dadurch gekennzeichnet, daß es sich bei der Feder um eine Gasdruckfeder (54) handelt.

## Claims

1. A pivoting device for an anti-skid chain assembly of a motor vehicle, in which
- in a cavity (4) of a housing (2) a gear rack (12) is guided in a longitudinally displaceable manner and a gear wheel (16) forming a transmission with the gear rack (12) is disposed, which wheel is seated in a rotationally secure manner on a primary shaft (22), the one end of which protrudes from the housing (2, 20) and drives a swivel arm,
**characterised in that**
- the internal wall (6) of the cavity (4) is cylindrical,
- the gear rack (12) extends into a cylinder section (30) of the cavity (4) sealed by an end wall (8) and has a piston (32), which is formed by a cylindrical portion (32) of the gear rack (12) lying outside the row of teeth (14) and is guided in sealed manner along the cylindrical inner wall (6) of the cylinder portion (30),
- hydraulic oil from a hydraulic cylinder (41) can be pumped into the space sealed in this manner between piston (32) and end wall (8) to move the gear rack (12) and
- the hydraulic piston (42) of the hydraulic cylinder (41) is coupled to a pneumatic piston (46) of a pneumatic cylinder (44), which possesses a larger diameter than the hydraulic cylinder (41).

2. A device according to Claim 1,
**characterised in that** the diameter of the gear rack (12) is substantially constant over its entire length.

3. A device according to Claim 1 or 2,
**characterised in that** the ratio of the effective areas of hydraulic and pneumatic pistons is roughly 1:10.

4. A device according to one of Claims 1 to 3,
**characterised in that** the hydraulic cylinder (41) is connected via a hose line (38) to the cylinder section (30) of the housing (2).

5. A device according to one of Claims 1 to 3,
**characterised in that** the hydraulic cylinder (41) is mounted on the cylinder section (30) of the housing (2).

6. A device according to Claim 5,
**characterised in that** the hydraulic cylinder (41) is seated on the end wall (8) of the cylinder section (30).

7. A device according to Claim 5 or 6,
**characterised in that** the outlet aperture (39) of the hydraulic cylinder (41) aligns with an inlet aperture (36) in the cylinder section (30) of the housing (2).

8. A device according to one of Claims 1 to 7,
**characterised in that** the hydraulic cylinder (41) and the pneumatic cylinder (44) comprise a common housing.

9. A device according to one of Claims 1 to 8,
**characterised in that** the gear rack (12) contains a cavity (52) open at its end opposite the cylinder section (30) of the housing (2), in which a spring (54) acting in the direction of displacement of the gear rack (12) and supported on the housing (2, 10) is seated.

10. A device according to Claim 9,
**characterised in that** the spring is a gas pressure spring (54).

## Revendications

1. Dispositif de pivotement pour un agrégat de chaine anti-dérapage, dans lequel
- dans un espace creux (4) d'un carter (2), une crémaillère (12) est guidée en étant capable de translation longitudinale et une roue dentée (16), formant un engrenage avec la crémaillère (12), est disposée, laquelle roue dentée repose solidaire en rotation sur un arbre d'entraînement (22), dont l'une des extrémités fait saillie hors du carter (2, 20) et entraîne un bras de pivotement,
caractérisé en ce que,
- la paroi interne (6) de l'espace creux (4) est cylindrique,
- la crémaillère (12) pénètre dans une section de cylindre (30) de l'espace creux (4), obturée par une paroi frontale (8) et présente un piston (32), qui est constitué par une section de cylindrique (32) de la crémaillère (12), située en dehors de la série de dents (14) et qui est guidé de manière étanche sur la paroi interne cylindrique (6) de la section de cylindre (30),
- de l'huile hydraulique peut être pompé par un vérin hydraulique (41) dans l'espace ainsi étanchéifié, entre le piston (32) et la paroi frontale (8), pour déplacer la crémaillère (12),
- le piston hydraulique (42) du vérin hydraulique (41) est couplé avec un piston pneumatique (46) d'un vérin pneumatique (44), lequel présente un diamètre supérieur à celui du vérin hydraulique (41).

2. Dispositif selon la revendication 1,
caractérisé en ce que, le diamètre de la crémaillère (12) est sensiblement constant sur toute sa longueur.

3. Dispositif selon l'une quelconque des revendications 1 ou 2,
caractérisé en ce que, le rapport des surfaces actives des pistons hydraulique et pneumatique est d'environ 1:10.

4. Dispositif selon l'une quelconque des revendications 1 à 3,
caractérisé en ce que, le vérin hydraulique (41) est relié à la section de cylindre (30) du carter (2) par une ligne formant tuyau (38).

5. Dispositif selon l'une quelconque des revendications 1 à 3,
caractérisé en ce que, le vérin hydraulique (41) est monté sur la section de cylindre (30) du carter (2).

6. Dispositif selon la revendication 5,
caractérisé en ce que, le vérin hydraulique (41) repose sur la paroi frontale (8) de la section de cylindre (30).

7. Dispositif selon l'une quelconque des revendications 5 ou 6,
caractérisé en ce que, l'ouverture de sortie (39) du vérin hydraulique (41) est alignée avec l'ouverture d'entrée (36) de la section de cylindre (30) du carter (2).

8. Dispositif selon l'une quelconque des revendications 1 à 7,
caractérisé en ce que, le vérin hydraulique (41) et le vérin pneumatique (44) présentent un carter commun.

9. Dispositif selon selon l'une quelconque des revendications 1 à 8,
caractérisé en ce que, la crémaillère (12) comprend un espace creux (52) ouvert à son extrémité opposée à la section de cylindre (30) du carter (2), dans lequel repose un ressort (54) agissant dans la direction de translation de la crémaillère (12) et prenant appui sur le carter (2, 10).

10. Dispositif selon la revendication 9,
caractérisé en ce que, en ce qui concerne le ressort, il s'agit d'un ressort pneumatique (54).
